Europäisches Patentamt

European Patent Office

Office européen des brevets

(19)

(11) Veröffentlichungsnummer: **0 002 000**
**B1**

# (12) EUROPÄISCHE PATENTSCHRIFT

(45) Veröffentlichungstag der Patentschrift:
**07.01.81**

(21) Anmeldenummer: **78101263.8**

(22) Anmeldetag: **30.10.78**

(51) Int. Cl.³: **H 01 J 63/06,** H 01 J 9/26,
C 03 B 23/02

(54) Gasentladungsanzeigevorrichtung mit Abstandselementen und Verfahren zur Herstellung von einer Abstandselementenstruktur und dieser Anzeigevorrichtung.

(30) Priorität: **11.11.77 DE 2750587**

(43) Veröffentlichungstag der Anmeldung:
**30.05.79 Patentblatt 79/11**

(45) Bekanntmachung des Hinweises auf die Patenterteilung:
**07.01.81 Patentblatt 81/1**

(84) Benannte Vertragsstaaten:
**FR GB NL**

(56) Entgegenhaltungen:
**DE-A-2 255 465**
**DE-A-2 615 681**
**DE-A-2 641 962**
**GB-A-1 098 833**

(73) Patentinhaber: **SIEMENS AKTIENGESELLSCHAFT Berlin
und München, Postfach 22 02 61, D-8000 München 22 (DE)**

(72) Erfinder: **Veith, Werner, Bergstrasse 152,
D-6900 Heidelberg (DE)**
Erfinder: **Stein, Christian, Reinekestrasse 22,
D-8000 München 90 (DE)**

Gasentladungsanzeigevorrichtung mit Abstandselementen und Verfahren zur Herstellung von einer
Abstandselementenstruktur und dieser Anzeigevorrichtung

Die Erfindung betrifft ein Gasentladungs-Display gemäss dem Oberbegriff des Anspruchs 1. Derart aufgebaute Plasmapanels, die bereits in mehreren Versionen zum Stand der Technik gehören (DE-AS 1811272, DE-OS 2412869, US-PS 3800186 oder US-PS 3845241), arbeiten nach folgendem Prinzip: Das im Entladungsraum erzeugte Plasma dient als Elektronenquelle. Von dieser Quelle werden die Elektronen durch selektiv angesteuerte Löcher in der Steuerstruktur in den Nachbeschleunigungsraum gezogen; dort nehmen sie Energien von einigen kV auf und landen schliesslich auf der Nachbeschleunigungsanode, wobei in einer der Anode vorgelagerten Lumineszenzschicht ein Leuchtfleck entsteht. Dieser Lichtpunkt ist besonders hell, wenn die Glimmentladung gemäss der zitierten Offenlegungsschrift 2412869 zwischen einer parallel zu einer Steuerplatte verlaufenden Flächenkathode und der jeweils angesteuerten Zeile der Steuerplatte in Form eines keilförmigen Längsplasmas brennt.

Bei den geschilderten Zwei-Kammer-Anzeigen kommt es, vor allem wenn sie mit einer prismatischen Längsentladung arbeiten, wesentlich darauf an, dass die Steuerstruktur auf ihrer ganzen Fläche einen konstanten Abstand von ca. 1 mm gegen die Nachbeschleunigungsanode einhält. Nur dann sind nämlich die Voraussetzungen dafür gegeben, dass die Potentialverhältnisse und insbesondere der Anodendurchgriff an allen Öffnungen der Steuerstruktur identisch sind und somit das Display in jedem Bildpunkt mit relativ geringen Spannungen sauber geschaltet werden kann.

Die erforderliche Distanzierung liesse sich theoretisch mit einer Platte realisieren, die zwischen die Frontplatte und die Steuerstruktur eingesetzt wird und zu den Steuerstrukturöffnungen fluchtende Löcher enthält. Die Praxis hat jedoch gezeigt, dass eine solche Platte, die immerhin um ein Vielfaches dicker sein muss als die Steuerstruktur, nicht so ohne weiteres mit einer Vielzahl von feinen Durchbrüchen versehen werden kann und daher beispielsweise für einen Fernseh-Bildschirm praktisch nicht in Frage kommt.

Aus diesem Grund hat man auch schon erwogen, die Steuerplatte an der Rückplatte über Stäbchen aufzuhängen bzw. gegen die Frontplatte mittels Stiften zu distanzieren oder aber die beiden Aussenplatten durch kammartige, die Steuerstruktur an einzelnen Stellen durchsetzende Platten gegeneinander abzustützen (eigene ältere Patentanmeldung P 2615721). Die Stab- bzw. Stift-Technik mag ihren Zweck bei Steuerstrukturen mit einem plattenförmigen Elektrodenträger erfüllen, sie ist aber bei Steuereinheiten mit einem zwischen den Zeilenleitern entfernten Elektrodensubstrat (eigene ältere Patentanmeldung P 2615681) weniger geeignet. Bei Strukturen mit verdecktem Träger könnte man auf die Stützplattenvariante übergehen; allerdings gestaltet sich hier der Zusammenbau des Displays nicht ganz einfach und besteht ausserdem die Gefahr, dass die sehr dünnen Zinken unter Umständen umknicken.

Die Erfindung steht vor der Aufgabe, ein Panel der eingangs genannten Art zu schaffen, bei dem der ausserordentlich kritische Abstand zwischen der Frontplatte und der Steuerstruktur ohne besonderen Fertigungsaufwand exakt eingehalten ist. Zur Lösung dieser Aufgabe wird erfindungsgemäss die im Anspruch 1 charakterisierte Gasentladungsanzeigevorrichtung vorgeschlagen.

Die erfindungsgemäss vorgesehenen Stege erfüllen ihre Distanzierfunktion auch unter den verschiedenartigsten mechanischen Belastungen und Verformungen der beiden zu beabstandenden Teile, insbesondere auch bei einem aussendruckbedingten Durchhang der Frontplatte. Dabei ist von Vorteil, dass die in den Nachbeschleunigungsraum eintretenden Elektronenströme durch die Stege praktisch nicht gestört, insb. nicht merklich abgelenkt werden; dies gilt vor allem dann, wenn man den Stegen eine gewisse (Oberflächen-)Leitfähigkeit gibt, die schädliche Aufladungen verhindert. Ein weiterer Vorzug ist darin zu sehen, dass die Stege einen Teil der Sekundärelektronen, die durch den Elektronenaufprall auf der Nachbeschleunigungsanode erzeugt werden und die Leuchtstoffumgebung aktivieren, abfangen.

Besonders günstig gestalten sich die Verhältnisse, wenn man die Stege zu in sich festen Strukturen zusammenfügt. Selbsttragende Strukturen lassen sich leichter handhaben und bequemer in den richtigen Positionen verankern. Die Grösse solcher Strukturen wird im allgemeinen durch die thermischen Ausdehnungsunterschiede zwischen den einzelnen Partnern, also der Frontplatte, der Distanzierstruktur und der Steuerstruktur begrenzt sein. Bestehen die Stege beispielsweise aus Keramik, so können die einzelnen Distanzierstrukturen nur eine relativ kleine Fläche abdecken. Mit einer einzigen, den gesamten Nachbeschleunigungsraum einnehmenden Distanzierstruktur käme man aus, wenn alle drei genannten Teile aus dem gleichen Werkstoff, insbesondere aus einem geeigneten Glas bestehen. Eine günstig ausgebildete «Waben-Struktur» aus (Keramik-)Stegen wird in Anspruch 3 beschrieben; in Anspruch 4 ist eine relativ einfach herstellbare «Girlanden-Struktur» aus jeweils zwei mäanderförmigen (Glas-)Stegen angegeben.

Soll die Steuerstruktur nur durch Druck und Gegendruck in ihrer Position gehalten werden, so muss sie auch noch gegen die Rückplatte des Displays abgestützt werden. Zweckmässige Stützvorkehrungen gehen aus den Ansprüchen 8, 11 bis 13 und 15 hervor. Die Stützelemente sollten in jedem Falle so plaziert werden, dass sie im Zusammenwirken mit den Abstandselementen möglichst geringe Drehmomente bzw. Scherkräfte auf die Steuerstruktur ausüben.

Weitere vorteilhafte Ausgestaltungen und Weiterbildungen der Erfindung sind Gegenstand zusätzlicher Ansprüche.

Die Erfindung soll nun anhand von besonders bevorzugten Ausführungsbeispielen unter Bezugnahme auf die beigefügte Zeichnung näher erläutert werden. In den Figuren sind einander entsprechende Teile mit gleichen Bezugszeichen versehen. Es zeigen:

Fig. 1 von der aus der DE-OS 2413869 bekannten Zwei-Kammer-Anzeigevorrichtung die Flächenkathode, die Steuerstruktur und die Nachbeschleunigungsanode in ihrer räumlichen Zuordnung und mit ihren Betriebspotentialen;

Fig. 2 von einem ersten Ausführungsbeispiel der Erfindung eine teilweise weggebrochene Perspektivansicht des Hülleninneren;

Fig. 3 die Steuerstruktur und die Distanzierstruktur aus der Fig. 2, von der Frontplatte aus gesehen;

Fig. 4 in der gleichen Darstellungsweise wie Fig. 3 die Steuerstruktur mit einer abgewandelten Distanzierstruktur und

Fig. 5 die Steuerstruktur mit einer weiteren Ausführung der Distanzierstruktur, ebenfalls von der Frontplatte aus gesehen.

Die Figuren sind der Übersicht halber teilweise stark vereinfacht. Alle für ein Verständnis der Erfindung nicht unbedingt erforderlichen Einzelteile eines Gasentladungspanels, beispielsweise Elektrodenzuleitungen oder Ansteuerkreise, sind unbezeichnet geblieben oder ganz weggelassen.

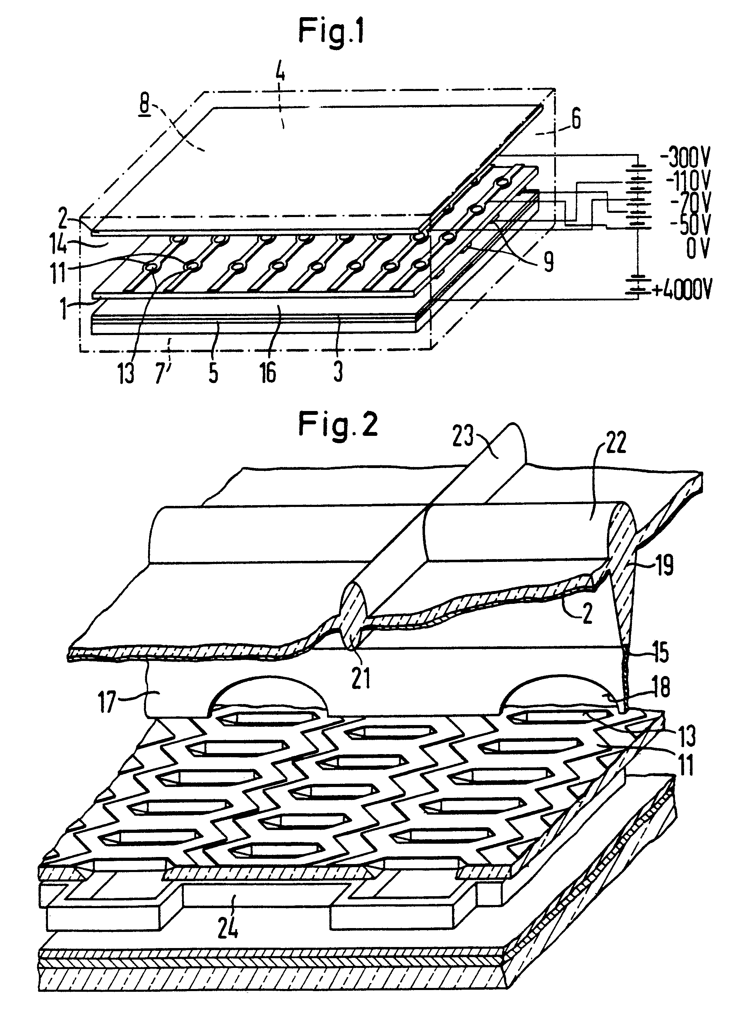

Bei der in Fig. 1 ohne jegliche Halterungselemente dargestellten Anzeigevorrichtung ist eine Steuerplatte 1 zwischen einer flächigen Kathode (Flächenkathode) 2 auf der einen Seite und einer ebenfalls flächigen Anode (Nachbeschleunigungsanode) 3 angeordnet. Alle drei Teile sind zueinander parallel und befinden sich im Innern einer aus einer Rückplatte 4, Seitenwandungen 6 und einer Frontplatte 7 zusammengesetzten (strichpunktiert gezeichneten) Hülle 8. Die Anode ist auf eine Lumineszenzschicht 5 aufgebracht und befindet sich vom Betrachter aus gesehen vor der Steuerplatte, die Kathode dementsprechend hinter der Steuerplatte. Vorder- und Rückseite der Steuerplatte sind jeweils mit zueinander parallelen Leiterbahnen (Spaltenleiter bzw. Steuerelektroden 9, Zeilenleiter 11) beschichtet. Beide Leiterscharen sind an ihren Kreuzungspunkten mit Öffnungen versehen (Spaltenleiteröffnungen 12, Zeilenleiteröffnungen 13). An den gleichen Stellen ist auch die Steuerplatte gelocht, so dass die aus der Platte und den Elektroden bestehende Steuerstruktur eine regelmässige Lochmatrix enthält. Es sei darauf hingewiesen, dass die Zuordnung der Zeilen und Spalten zu den kathodenseitigen bzw. anodenseitigen Elektrodenbahnen willkürlich ist und selbstverständlich auch vertauscht werden kann.

Im Betrieb des Displays ist die Flächenkathode gegenüber der jeweils angesteuerten Zeile um etwa 300 V negativ vorgespannt und liegt die angesteuerte Zeile auf Erdpotential. Die übrigen Zeilen sind auf −40 bis −100 V vorgespannt. Die nichtangesteuerten Spalten sind um etwa 100 bis 120 V gegen Masse negativ vorgespannt und werden bei Ansteuerung auf −50 V angehoben. Die Nachbeschleunigungsanode liegt auf einigen kV. Die Abstände zwischen den einzelnen Elektroden sind so gewählt, dass im Raum zwischen der Flächenkathode und den Zeilen (Gasentladungsraum 14) eine normale Glimmentladung brennt, während im Raum zwischen der Nachbeschleunigungsanode und den Spaltenleitern (Nachbeschleunigungsraum 16) wegen des geringen Abstandes kein Plasma gezündet werden kann.

Weitere Herstellungs- und Betriebseinzelheiten sind den bereits zitierten Veröffentlichungen, insb. der DE-OS 2412869, sowie der eigenen älteren Patentanmeldung P 2508393 zu entnehmen.

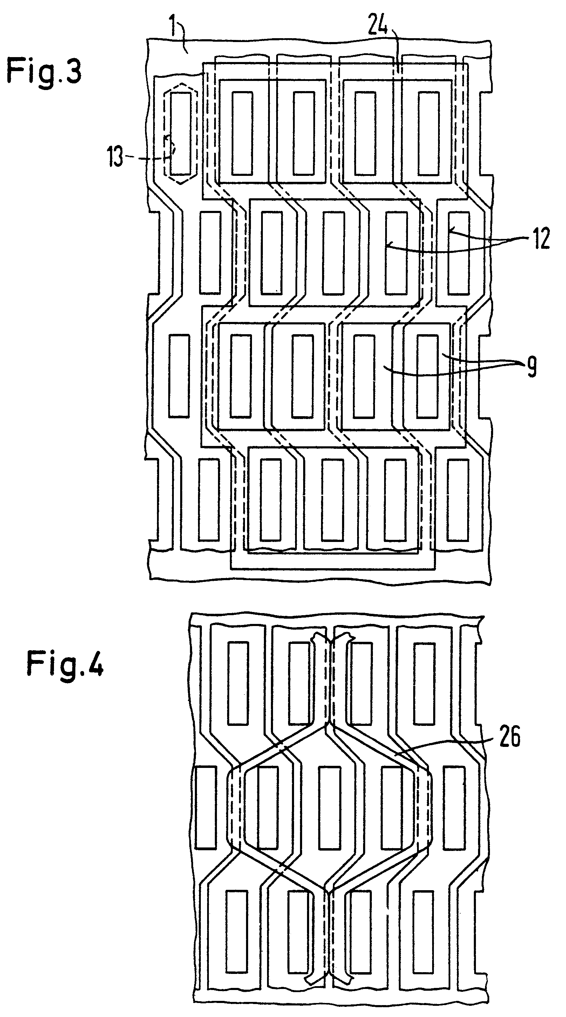

Bei dem Ausführungsbeispiel der Figuren 2 und 3, das für einen Fernsehbildschirm vorgesehen ist, wird der Gasentladungsraum durch eine Anzahl von Stützplatten 17 unterteilt, die sich zwischen der Steuerstruktur 1 und der Rückplatte 4 erstrecken, und zwar in Ebenen, zu denen die Zeilen 11 senkrecht stehen. Jede Stützplatte ist dort, wo sie ein Zeilenleiterloch 13 schneidet, mit einer bogenförmigen Ausnehmung 18 versehen. Der Bogen ist so weit gespannt, dass er, selbst wenn sich auf ihm ein leitender Film niederschlagen sollte, keinen Kurzschluss zwischen benachbarten Zeilenleitern verursachen kann.

Die Stützplatten 17 schlagen vorn direkt an der Steuerstruktur an und finden hinten jeweils Aufnahme in einer Senkrille 15 einer von der Rückplatte nach vorn vorspringenden Längsstrebe 19. Diese Längsstreben dienen einmal dazu, die Höhe der dünnen Stützplatten zu verkürzen und tragen ausserdem zur Stabilisierung der Rückplatte 4 bei. Im vorliegenden Beispiel werden die Längsstreben jeweils noch durch eine Anzahl von Querstreben 21 verstärkt, die in regelmässigen Abständen von den Längsstreben ausgehen und ebenfalls der Rückplatte 4 angeformt sind. Die Querrippen jeder Längsrippe halten zur jeweils benachbarten Längsrippe einen Abstand ein und sind zu deren Querrippen versetzt, so dass der Rückplattenboden – die eigentliche Kathode – immer noch eine zusammenhängende Fläche bildet und über einen einzigen Kontakt mit einer Spannungsquelle verbunden werden kann. Statt einer Konstruktion mit langen Längsrippen und kurzen Querrippen wären natürlich auch andere Rückplattenprofile denkbar. Möglich wäre es aber auch, mehrere Längsstreben durch Querstäbe zu verbinden, die in Rillen in der Rückplatte befestigt sein könnten. Diese Querverbindungen sollten allerdings nur relativ niedrig sein, da sie sonst das Plasma stören.

Die Rückplatte ist zusätzlich noch auf ihrer Aussenseite durch ein Strebenwerk aus Längsrippen 22 und Querrippen 23 versteift. Im Beispiel der Figuren 2 und 3 haben die Stabilisierungselemente folgende Höhen: Bei einer Entladungsraumhöhe von ca. 20 mm sind die Längsstreben ungefähr 15 mm und die Querstreben etwa 10 mm hoch. Für die ca. 0,13 mm dicken Stützplatten verbleibt eine Höhe von ca. 5 mm. Die Senkrillen 15 in den Längsstreben sind wesentlich breiter als die Stützplatten, beispielsweise 0,5 bis 1 mm breit, damit für die Positionierung der Stützen noch ein gewisser Spielraum zur Verfügung steht. Die verstärkte Rückwand besteht wie die übrige Hülle aus Glas. Der gesamte Glaskörper wird, wie bei den herkömmlichen Fernsehröhren üblich, durch einen einzigen Pressvorgang hergestellt. Beim Pressen lassen sich zugleich auch die Senkrillen oder auch andere Vertiefungen zur Stützplattenbefestigung einprägen.

Der Fig. 3 entnimmt man die Form der zwischen der Nachbeschleunigungsanode und der Steuerstruktur befindlichen Distanzierstruktur: Einige Stege sind zu einer Distanziereinheit 24 mit mehreren rechteckförmigen, jeweils durch Wände gleicher Stärke voneinander getrennten Ausnehmungen zusammengefasst. Über die gesamte Steuerstruktur sind eine Anzahl dieser wabenförmigen Gebilde verteilt. Die Wabenwände sind höchstens 200 μ, vorzugsweise höchstens 150 μ dick, etwa 1 mm hoch und bestehen aus Keramik. Die Stege sind in (nicht dargestellten) Rillen in der Frontplatte 7 eingesetzt und mit einem Glaslot fixiert. Die Rillen könnten beispielsweise eingeätzt werden, wobei die nicht zu ätzende Fläche der Glasplatte mit durchsichtigem, leitendem Material, wie beispielsweise $SnO_2$ bedeckt sein kann. Die keramische Distanzierstruktur umfasst nur relativ wenige Öffnungen der Steuerstruktur, da sie anderenfalls wegen der verschiedenen Ausdehnungskoeffizienten von Glas und Keramik bei den herrschenden Betriebstemperaturen der einen oder anderen Steuerstrukturöffnung zu nahe kommen würde.

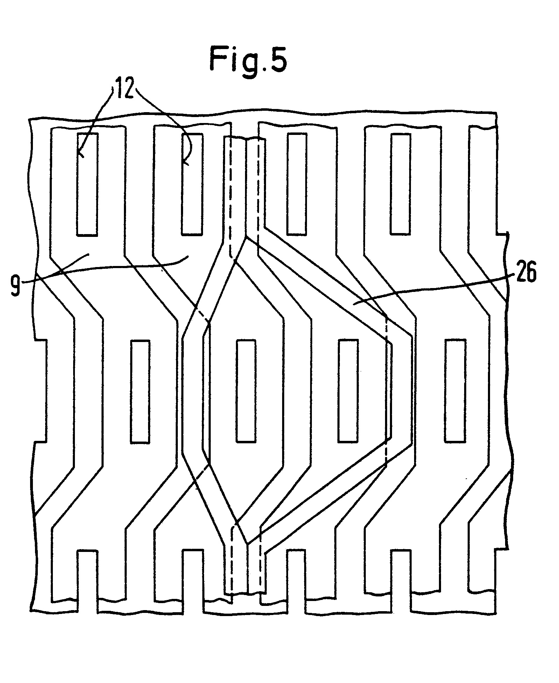

Fig. 4 zeigt eine Distanzierstruktur, bei der zwei mäanderförmige Stege spiegelbildlich zusammengesetzt sind, so dass ein langgestrecktes Gebilde mit alternierenden Ausbauchungen und Einschnürungen entsteht. Eine solche, mit 26 bezeichnete «Girlande» lässt sich besonders ökonomisch herstellen: Man führt Glasbänder von geeigneter Breite und Dicke (beispielsweise 1 bis 2 mm Höhe, 150 μ Dicke) in verformbarem Zustand zwischen zwei Zahnrädern hindurch und klebt dann zwei dieser Bänder durch Wärmebehandlung zusammen. Girlanden-Strukturen sind auch dann verwendbar, wenn das Elektrodensubstrat der Steuerstruktur zwischen den Zeilenleitern gemäss der Patentanmeldung P 2615681 entfernt ist. In diesem Fall wird man die Girlanden allerdings asymmetrisch ausbilden, und zwar derart, dass die Glasstege einmal durch die schrägen Abschnitte der Spaltenleiter und zum anderen durch die Zeilenleiter zur Kathoden hin abgedeckt werden (Fig. 5).

Die Fig. 4 lässt erkennen, dass die vertikalen Abschnitte der Stege sehr nahe bei den Steuerleiteröffnungen und damit beim Elektronenstahl verlaufen. Aufladungen der Stützen könnten zu Ablenkungen des Strahles und damit zu schlechter Ausleuchtung der Leuchtschirmflecke führen. Es ist daher sinnvoll, dem Stegmaterial einen ganz bestimmten, von dem des isolierenden Grundmaterials verschiedenen Leitfähigkeitswert zu geben. Dieser Wert muss so niedrig sein, dass der Energieverbrauch der angelegten Hochspannungsquelle gering bleibt, aber doch so hoch, dass zumindest die beim Schreiben einer Zeile entstehenden Aufladungen bis zur Wiederkehr des Strahles auf die gleiche Zeile restlos abgeklungen sind.

Die Erfindung beschränkt sich nicht auf die dargestellten Ausführungsbeispiele. So bleibt es dem Fachmann vor allem unbenommen, neben einer Waben- oder Girlandenstruktur aus Keramik bzw. Glas auch andere Formen und Isolatorwerkstoffe zu verwenden. Er hat dabei lediglich zu beachten, dass die Stege den geforderten «Zick-Zack»-Verlauf haben, die Leitermatrixdurchbrechungen auch unter Betriebstemperaturen vollkommen freilassen und möglichst überall – ggf. ausser an den Knotenpunkten der Stegstruktur – gleich dick sind.

**Neuer Patentanspruch 1**

1. Gasentladungsanzeigevorrichtung, enthaltend eine gasgefüllte, gasdichte Hülle mit einer Frontplatte, einer Rückplatte und einer das Hülleninnere in zwei Räume unterteilenden, plattenförmigen Steuerstruktur, die auf ihren beiden Seiten jeweils getrennt ansteuerbare, Zeilen- bzw. Spaltenleiter einer Matrix bildende Elektrodenbahnen trägt und zusammen mit diesen Bahnen in den Kreuzungspunkten der Matrix durchbrochen ist, mit mindestens einer Plasmaelektrode, vorzugsweise mindestens einer parallel zur Steuerstruktur verlaufenden Flächenkathode, in dem einen Hüllenraum (Gasentladungsraum) und mit mindestens einer Nachbeschleunigungsanode in dem anderen Hüllenraum (Nachbeschleunigungsraum), wobei die Plasmaelektrode derart angeordnet ist, dass im Gasentladungsraum eine Gasentladung brennen kann, während die Nachbeschleunigungsanode gegen die ihr zugewandten Elektrodenbahnen der Steuerstruktur (Steuerelektroden) über Abstandselemente in einem derart geringen Abstand gehalten ist, dass eine Spannung von einigen kV noch keine Gasentladung auslösen kann, dadurch gekennzeichnet, dass die Abstandselemente aus Stegen mit einer im wesentlichen konstanten Wandstärke bestehen, die sich in der Ebene der Steuerstruktur (1) erstecken, an den Durchbrechungen (Steuerelektrodenöffnungen 12) der Steuerstruktur (1) vorbeigeführt sind und abschnittsweise abwechselnd im wesentlichen parallel bzw. in einem Winkel zur Steuerelektrodenerstreckung verlaufen.

2. Vorrichtung nach Anspruch 1, dadurch gekennzeichnet, dass mehrere Stege zu einer Distanzierstruktur (24, 26) verfestigt sind, die eine Anzahl von jeweils eine oder mehrere Steuerstrukturdurchbrechungen einrahmende, durch die Stege voneinander getrennte Öffnungen enthält.

3. Vorrichtung nach Anspruch 2, dadurch gekennzeichnet, dass die Öffnungen der Distanzierstruktur rechteckig sind (wabenförmige Distanzierstruktur 24).

4. Vorrichtung nach Anspruch 2, dadurch gekennzeichnet, dass die Distanzierstruktur aus zwei mäanderförmig ausgebildeten, spiegelbildlich zueinander liegenden Stegen besteht (Girladen-Struktur 26 mit alternierenden Ausbauchungen und Einschnürungen).

5. Vorrichtung nach einem der Ansprüche 1 bis 4, dadurch gekennzeichnet, dass die Stege aus Keramik oder Glas bestehen.

6. Vorrichtung nach einem der Ansprüche 1 bis 5, dadurch gekennzeichnet, dass die einzelnen Stege bzw. Distanzierstrukturen (24, 26) eine Wandstärke von höchstens 200 μm, insbesondere höchstens 150 μm, haben.

7. Vorrichtung nach einem der Ansprüche 1 bis 6, dadurch gekennzeichnet, dass die Stege, insb. die Stegoberflächen, elektrisch leitend sind, derart, dass eine Stegaufladung, die ggf. durch einen in den Nachbeschleunigungsraum (16) eintretenden Elektronenstrahl erzeugt wird, bis zur nächstmöglichen Wiederkehr des Elektronenstrahls wieder abgeklungen ist.

8. Vorrichtung nach einem der Ansprüche 1 bis 7, mit Stützelementen zwischen der Steuerstruktur und der Rückplatte, dadurch gekennzeichnet, dass die Stützelemente als Stützplatten (17) ausgebildet sind und sich in zueinander parallelen Ebenen erstrecken, auf denen die Zeilenleiter (11) senkrecht stehen.

9. Vorrichtung nach einem der Ansprüche 1 bis 8, dadurch gekennzeichnet, dass die Front- und/oder Rückplatte (7, 4) jeweils auf ihrer der Steuerstruktur (1) zugewandten Seite Rillen enthält, in denen die Stege bzw. Stützplatten (17) eingesetzt sind.

10. Vorrichtung nach einem der Ansprüche 1 bis 9, dadurch gekennzeichnet, dass die Stege und/oder Stützplatten (17) mit der Frontplatte (7) bzw. Rückplatte (4) insb. mittels eines Glaslotes verfestigt sind.

11. Vorrichtung nach einem der Ansprüche 8 bis 10, dadurch gekennzeichnet, dass die Stützplatten (17) an ihrem rückplattenseitigen Ende durch parallel zu den Zeilenleitern (11) verlaufende Längsvorsprünge, die insb. von der Rückplatte (4) ausgehen, miteinander verbunden sind.

12. Vorrichtung nach einem der Ansprüche 8 bis 10, dadurch gekennzeichnet, dass die Stützplatten (17) an ihrem rückplattenseitigen Ende jeweils in einer Längsstrebe (19) Aufnahme finden, die von der Rückplatte (4) ausgehen.

13. Vorrichtung nach Anspruch 12, dadurch gekennzeichnet, dass von den Längsstreben (19) jeweils Querstreben (21) ausgehen, die ebenfalls der Rückplatte (4) angeformt sind und vorzugsweise zu den benachbarten Quer- bzw. Längsstreben (21 bzw. 19) einen Abstand einhalten.

14. Vorrichtung nach einem der Ansprüche 1 bis 13, dadurch gekennzeichnet, dass die Rückplatte (4) auf ihrer Aussenseite mit einem Gerüst aus von der Platte ausgehenden Längs- und Querrippen (22 und 23) versehen ist.

15. Verfahren zur Herstellung einer Vorrichtung nach Anspruch 4, mit Glasstegen, dadurch gekennzeichnet, dass geeignet bemessene Glasbänder in verformbarem Zustand zwischen zwei Zahnrädern hindurchgeführt werden und dann zu den Girlanden-Strukturen durch Hitzeeinwirkung miteinander verbunden werden.

**New Patent Claims 1**

1. Gas-discharge indicating device containing a gas-filled, gastight sheath which has a front plate, a back plate and a plate-shaped control structure which divides the interior of the sheath into two chambers and which on its two sides bears electrode paths which can each be separately controlled and which form row- and column-conductors of a matrix and which is perforated in the intersections of the matrix together with these paths, and which in the one sheath chamber (gas-discharge chamber) has at least one plasma electrode, preferably at least one surface electrode running parallel to the control structure, and which has at least one acceleration anode in the other chamber (acceleration chamber), wherein the plasma electrode is arranged in such manner that a gas discharge can burn in the gas-discharge chamber whereas the acceleration anode is held opposite the facing electrode paths of the control structure (control electrodes) and spaced by spacing elements at a distance which is so small that even a voltage of a few kV cannot trigger a gas discharge, characterised in that the spacing elements consist of crosspieces which have an essentially constant wall thickness and extend in the plane of the control structure (1) and are directed past the perforations (control electrode openings 12) of the control structure (1) and in sections alternately run essentially parallel and at an angle to the extent of the control electrodes.

2. Device as claimed in claim 1, characterised in that a plurality of crosspieces are fastened to form a spacing structure (24, 26) which contains a number of openings each of which border one or more control structure perforations and are separated from one another by the crosspieces.

3. Device as claimed in claim 2, characterised in that the openings of the spacing structure are rectangular (honeycombed spacing structure 24).

4. Device as claimed in claim 2, characterised in that the spacing structure consists of two serpentine crosspieces which are positioned relative to one another in mirror-image fashion (garland structure 26 provided with alternating bulges and contractions).

5. Device as claimed in one of the claims 1 to 4, characterised in that the crosspieces consist of ceramic or glass.

6. Device as claimed in one of the claims 1 to 5, characterised in that the individual crosspieces or spacing structures (24, 26) have a wall thickness no greater than 200 μm, for example no greater than 150 μm.

7. Device as claimed in one of the claims 1 to 6, characterised in that the crosspieces, in particular the surfaces of the crosspieces, are electrically conductive in such manner that charging of the crosspieces which is possibly produced by an electron beam entering into the acceleration chamber (16) has faded away by the next possible recurrence of the electron beam.

8. Device as claimed in one of the claims 1 to 7, provided with supporting elements between the control structure and the back plate, characterised in that the supporting elements are constructed as support plates (17) and extend within planes which are parallel to one another and to which the row conductors (11) are at right angles.

9. Device as claimed in one of the claims 1 to 8, characterised in that on the side facing towards the control structure (1) the front plate and/or back plate (7,4) each contains grooves into which the crosspieces and/or support plates (17) are inserted.

10. Device as claimed in one of the claims 1 to 9, characterised in that the crosspieces and/or support plates (17) are fastened to the front plate (7) and the back plate (4) for example by means of a glass solder.

11. Device as claimed in one of the claims 8 to 10, characterised in that at the back plate end the support plates (17) are connected to one another by means of longitudinal projections which run parallel to the row conductors (11) and originate from the back plate (4).

12. Device as claimed in one of the claims 8 to 10, characterised in that at the back plate end the support plates (17) are each accommodated in a longitudinal strut (19) which originates from the back plate (4).

13. Device as claimed in claim 12, characterised in that transverse struts (21) which equally form an integral part of the back plate (4) and are preferably spaced from the adjacent transverse or longitudinal struts (21 or 19) each originate from the longitudinal struts (19).

14. Device as claimed in one of the claims 1 to 13, characterised in that on the external side the back plate (4) is provided with a frame consisting of longitudinal and transverse ribs (22 and 23) which originate from the plate.

15. Process for the production of a device as claimed in claim 4 provided with glass crosspieces, characterised in that suitably dimensioned glass tapes are passed through in the deformable state between two toothed wheels and then connected to one another to form the garland structure by application of heat.

## Revendications

1. Dispositif d'affichage à décharge dans un gaz, comportant une enveloppe remplie de gaz et étanche au gaz, possédant une plaque frontale, une plaque arrière et une structure de commande en forme de plaque, subdivisant l'intérieur de l'enveloppe en deux espaces et qui porte, sur ses deux faces, des bandes d'électrodes pouvant être commandées séparément, et constituant des conducteurs de lignes et des conducteurs de colonnes d'une matrice, et qui est, ainsi que ses bandes d'électrodes, percée aux points de croisement de la matrice, et comportant au moins une électrode à plasma, de préférence au moins une cathode plate parallèle à la structure de commande dans l'un des espaces de l'enveloppe (espace de décharge dans le gaz) et comportant au moins une anode de post-accélération) dans l'autre espace de l'enveloppe (espace de post-accélération), l'électrode à plasma étant disposée de telle manière qu'il peut se produire dans l'espace de décharge dans le gaz une telle décharge, tandis que l'anode de post-accélération est maintenue au moyen d'entretoises contre les bandes d'électrodes, tournées vers ladite anode, de la structure de commande (électrodes de commande) à une distance aussi faible qu'une tension de quelques kV ne peut encore déclencher une décharge dans le gaz, caractérisé par le fait que les entretoises sont constituées par des barrettes possédant une paroi d'une épaisseur sensiblement constante et qui s'étendent dans le plan de la structure de commande (1), passent devant les perçages (ouvertures 12 des électrodes de commande) de la structure de commande (1) et sont disposées, par intervalles, alternativement sensiblement parallèlement ou bien en faisant un certain angle par rapport aux électrodes de commande.

2. Dispositif suivant la revendication 1, caractérisé par le fait que plusieurs barrettes sont fixées pour former une structure d'entretoisement (24, 26) qui contient un certain nombre d'ouvertures entourant respectivement un ou plusieurs perçages de structure de commande et séparées les unes des autres par les barrettes.

3. Dispositif suivant la revendication 2, caractérisé par le fait que les ouvertures de la structure d'entretoisement sont rectangulaires (structure d'entretoisement 24 en forme de nid d'abeille).

4. Dispositif suivant la revendication 2, caractérisé par le fait que la structure d'entretoisement est constituée par deux barrettes réaslisées en forme de méandres et disposées symétriquement l'une par rapport à l'autre (structure 26 en forme de guirlande possédant des élargissements et des rétrécissements alternés).

5. Dispositif suivant l'une des revendications 1 à 4, caractérisé par le fait que les barrettes sont en céramique ou en verre.

6. Dispositif suivant l'une des revendications 1 à 5, caractérisé par le fait que les différentes barrettes ou structures d'entretoisement (24, 26) possèdent une épaisseur de paroi égale tout au plus à 200 μ, et notamment tout au plus à 150 μ.

7. Dispositif suivant l'une des revendications 1 à 6, caractérisé par le fait que les barrettes, en particulier les surfaces des barrettes, sont électriquement conductrices de telle sorte qu'une charge des barrettes, qui est produite éventuellement par un faisceau d'électrons pénétrant dans l'espace de post-accélération (16), est à nouveau annihilée jusqu'au retour immédiatement suivant du faisceau électronique.

8. Dispositif suivant l'une des revendications 1 à 7, comportant des organes de support placés entre la structure de commande et la plaque arrière, caractérisé par le fait que les organes de support sont constitués sous la forme de plaques de support (17) et s'étendent dans des plans parallèles entre eux et auxquels les conducteurs de lignes (11) sont perpendiculaires.

9. Dispositif suivant l'une des revendications 1 à 8, caractérisé par le fait que la plaque frontale et/ou la plaque arrière (7, 4) contient respectivement sur sa face tournée vers la structure de commande (1), des rainures dans lesquelles les barrettes ou les plaques de support (17) sont insérées.

10. Dispositif suivant l'une des revendications 1 à 9, caractérisé par le fait que les barrettes et/ou les plaques de support (17) sont fixées à la plaque frontale (7) ou à la plaque arrière (4), notamment au moyen d'une soudure pourverre.

11. Dispositif suivant l'une des revendications 8 à 10, caractérisé par le fait que les plaques de support (17) sont reliées entre elles à leur extrémité située du côté de la plaque arrière, par des parties saillantes longitudinales, qui s'étendent parallèlement aux conducteurs de lignes (11) et s'étendent en particulier à partir de la plaque arrière (4).

12. Dispositif suivant l'une des revendications 8 à 10, caractérisé par le fait que les plaques de support (17) sont logées, au niveau de leur extrémité située du côté de la plaque arrière, dans des entretoises longitudinales (19) qui s'étendent à partir de la plaque arrière (4).

13. Dispositif suivant la revendication 12, caractérisé par le fait qu'à partir des entretoises longitudinales (19) s'étendent respectivement des entretoises transversales (21) qui sont également prévues sur la plaque arrière (4) et sont de préférence à une certaine distance des entretoises transversales ou longitudinales voisines (21 ou 19).

14. Dispositif suivant l'une des revendications 1 à 13, caractérisé par le fait que la plaque arrière (4) est équipée, sur sa face extérieure, d'un treillis formé par des nervures longitudinales et des nervures transversales (22 et 23) partant de la plaque.

15. Procédé pour fabriquer un dispositif suivant la revendication 4 comportant des barrettes en verre, caractérisé par le fait que l'on fait passer des bandes de verre, dimensionnées de façon appropriée, à l'état déformable, entre deux roues dentées et que ces bandes de verre sont reliées entre elles pour former des structures en forme de guirlande, sous l'action de la chaleur.

## Fig.1

-300 V
-110 V
-70 V
-50 V
0 V

+4000V

## Fig.2

**Fig.3**

**Fig.4**

# Fig.5